# EUROPEAN PATENT SPECIFICATION

(11) **EP 3 158 176 B1**
(45) Date of publication and mention of the grant of the patent: **15.08.2018**
(21) Application number: 15729872.0
(22) Date of filing: 23.06.2015
(51) Int. Cl.: F01P 11/12, A01D 41/12

(54) **COOLING SYSTEM**
KÜHLSYSTEM
SYSTÈME DE REFROIDISSEMENT

(30) Priority: 23.06.2014 BE 201400488
(43) Date of publication of application: 26.04.2017
(73) Proprietor: CNH Industrial Belgium nv, 8210 Zedelgem (BE)
(72) Inventor: WOLFCARIUS, Nico, J., M., B-8720 Wakken (BE); NEYRINCK, Bert, B-8490 Snellegem (BE)
(74) Representative: CNH Industrial IP Department
(86) International application number: PCT/EP2015/064084
(87) International publication number: WO 2015/197602

(56) References cited:
- WO-A1-85/01311
- WO-A1-2014/038731
- JP-U- H 023 921
- JP-U- H02 117 217

## Description

The present invention relates to a cooling system for a work vehicle such as an agricultural vehicle. Furthermore, the invention relates to a method for cleaning such cooling system.

Work vehicles, for example agricultural vehicles such as forage harvesters, agricultural combines or other self-propelled agricultural vehicles typically comprise cooling packages for cooling the engine, the hydraulic system, and other heat generating components of the agricultural vehicle. These cooling packages have significant dimensions and cooling capacity, and correct operation of these cooling packages is essential for the vehicle to operate in an optimal manner. Such cooling system basically contains an air intake, a heat exchanger with an array of apertures for air passage and at least one fan for forcing air to flow through the cooling system. These elements are successively positioned so that air can be sucked into the air intake, forced to flow through the apertures of the heat exchanger, wherein the fan is typically placed behind the heat exchanger (at the other side of the heat exchanger than the air intake).

Agricultural vehicles are designed to manipulate crop material on a field. Such manipulation of crop material on a field typically generates a significant amount of dust and small particles (hereafter referred to as contaminants). Manipulation of crop material is often executed at a front end of the agricultural vehicle. Therefore the agricultural vehicle and particularly the cooling system of the agricultural vehicle is adapted to deal with this significant amount of contaminants.

In prior art systems, for example in EP 2 546 492, a dust screen is placed between the heat exchanger and the air intake, which screen has openings that are significantly smaller than the apertures of the heat exchanger. As a result, contaminants will be stopped by the screen, and will consequently not reach the heat exchanger. As a result, contaminants cannot clog into the apertures of the heat exchanger, thereby obstructing air passage. In this manner, the heat exchanger remains clean and open to air passage so that cooling is guaranteed. To remove contaminants from the screen, a screen cleaning system is provided. This screen cleaning system is formed by an arm that is connected to a vacuum source, and which arm is moved over the screen. In this manner, the arm sucks contaminants of the screen thereby cleaning the screen.

A drawback of the known cooling system comprising a screen and a screen cleaning mechanism is that such cooling system is complex to build into an agricultural vehicle, and only results in a suboptimal cooling.

Document WO2014/038731 A discloses a cooling system for a work vehicle with a suction element moveable over a heat exchanger.

It is an object of the present invention to improve the cooling system for an agricultural vehicle.

To this end, the cooling system for a work vehicle according to the invention successively comprises an air intake, a heat exchanger with an array of apertures for air passage, and at least one fan for forcing air to flow from the air intake through the cooling system, the cooling system further comprising an elongated suction element that is movable over the array of apertures in an area between the heat exchanger and the air intake and wherein an elongated back plate is moveable over the array of apertures in an area between the heat exchanger and the at least one fan, which back plate is operationally connected to the suction element so that the back plate moves together with the suction element.

The present invention is based on the insight that the dust screen can be omitted when an adequate contaminant removing system is provided at the heat exchanger itself. This insight goes against the general teaching in the art, wherein consequently screens are provided to protect heat exchangers from contaminants. According to the invention, a suction element is provided at one end of the heat exchanger while a back plate is provided at the opposite end of the heat exchanger. The back plate and the suction element are provided to move together (also described as moving in sync), meaning that back plate and elongated suction element are aligned along the movement. Thereby, the suction element is located between the air intake and the heat exchanger while the back plate is positioned between the fan and the heat exchanger. Because the back plate moves in sync with the suction element, the back plate minimizes the influence of the fan at least for that part of the heat exchanger where the suction element is positioned. In this manner, the back plate and suction element synergetically cooperate together. As a result, the suction element can easily and effectively suck contaminants from the array of apertures, thereby cleaning the heat exchanger. In fact, while the fan forces air through the array of apertures in one direction, the suction element and back plate force air through the apertures in an opposite direction. In this manner, the heat exchanger can be effectively cleaned.

The cooling system of the invention has major advantages compared to prior art cooling systems. Because the dust screen is omitted, air can flow more easily through the cooling system. In prior art cooling systems, the dust screen will always form an extra resistance for the air flow. Indeed, a pressure fall will occur over the dust screen, thereby decreasing air throughput capacity. Furthermore, installing a dust screen and dust screen cleaning mechanism requires an amount of space in the agricultural vehicle, and because the dust screen is omitted in the system of the invention, the cooling system of the invention is more compact. Tests have shown that the cooling capacity of a cooling system of the invention is significantly higher than the cooling capacity of a prior art cooling system with the same outer dimensions.

Preferably, the suction element comprises an elongated suction opening defined by outskirts of the suction element (the outskirts being the borders or physical edges of the opening), wherein the outskirts are mounted directly adjacent to a front surface of the heat exchanger, and wherein the outskirts are mounted with respect to front surface of the heat exchanger at a distance that is smaller than 30 mm and that is larger than 5 mm. More preferably, the outskirts are mounted with respect with the front surface at a distance that is smaller than 20 mm, most preferably, smaller than 15 mm. More preferably, the outskirts are mounted with respect with the front surface at a distance that is larger than 10 mm. Tests have shown that when the distance between the suction element and the heat exchanger is larger than 30 mm, the suction capacity to effectively remove contaminants away from the array of apertures is too low. When the suction element comes too close (closer than 5 mm), large contaminants can be pushed into the array of apertures by the suction element by touching the contaminant by means of the outskirt. Such contaminants that are pushed into the array of apertures are typically stuck in the heat exchanger and cannot be removed from the apertures via the suction element. Therefore, the distance of the suction element (preferably the outskirts defining the suction opening of the suction element) and the front surface of the heat exchanger is optimally between 10 mm and 15 mm.

Preferably, the back plate has a width that is substantially equal to the width of the elongated suction element. Tests have shown that when the width of the back plate is larger than the width of the suction element, a turbulent air flow arises directly adjacent to the suction element, which turbulent air flow blows contaminants away from the suction element. In this manner, the heat exchanger cannot be optimally cleaned. When the back plate has a width that is smaller than the width of the elongated suction element, then the back plate cannot optimally minimize the effect of the fan that is forcing air to flow to the heat exchanger. As a result, the fan and the suction element will work against each other, and contaminants cannot be optimally removed. In this context, the width being equal to is defined as the width being identical with a tolerance of maximum 10 mm, preferably maximum 5 mm.

Preferably, the suction element is connected to an outlet via an air pump so that contaminants can be removed from the array of apertures and expelled via the outlet. Via the outlet, contaminants can be removed from the agricultural vehicle.

Preferably, the elongated suction element is movably mounted to a first rail that extends substantially perpendicular to a longitudinal direction of the suction element. In this manner, the suction element is optimized to cover a rectangular surface. Since substantially all heat exchangers have a rectangular shape, the suction element mounted to the first rail is optimized for cleaning the complete surface of the heat exchanger is an efficient manner.

According to one embodiment of the invention, the back plate is mounted to a second rail that is parallel to the first rail. Thereby, the second rail is provided to support the back plate in a movement that is synchronized with the movement of the suction element. According to an alternative embodiment, a second rail is provided at the suction element so that the suction element is guided by both the first rail and the second rail, as a result of which the suction element is firmly held and rotation of the suction element can be countered. In this alternative embodiment, the back plate is not guided by a rail, but is connected to the suction element and thereby carried by the suction element.

Preferably, the cooling system comprises a groove at a location of the heat exchanger, which groove extends in the moving direction of the suction element, and wherein the suction element and back plate are physically connected via a rod extending through the groove, so that the back plate moves in sync with the suction element. Via the rod, the back plate is physically connected to the suction element. As a result, any movement of the suction element is directly followed by the back plate, so that the back plate cannot but to move in synchronization with the suction element. Thereby, the rod extends through a groove at the heat exchanger, which groove extends in the moving direction of the suction element. The groove is typically provided at a side end of the heat exchanger. Further preferably, the groove is sealed in order to minimize bypass of air flow (meaning flow generated by the cooling fan that does not pass through the coolers and hence reduces the cooling efficiency of the system). The groove can be sealed by brushes that cancel the bypass flow but enable the rod to make the reciprocal movement.

Preferably, the back plate is provided with raised edges, wherein the raised edges are provided to at least partially contact the heat exchanger. Because the raised edges at least partially contact the heat exchanger, the influence of the fan is minimized at least for the apertures of the heat exchanger that are covered by the back plate.

Preferably, the extent of the outskirts is substantially equal to the extent of the raised edges. Because the extent of the outskirts of the suction element is substantially equal to the extent of the raised edges of the back plate, the back plate covers the same apertures of the array of apertures as the suction element. As a result, these apertures can be cleaned in an optimal manner.

Preferably, the heat exchanger is substantially rectangular, and wherein the elongated suction element extends parallel to one of the sides of the rectangular heat exchanger and is provided to move perpendicular thereto. In this manner, the suction element is optimized to clean the complete rectangular heat exchanger.

Preferably, the suction element is provided with driving means for reciprocatingly driving the suction element over the heat exchanger. Via the reciprocal movement, the heat exchanger can be constantly cleaned during operation of the agricultural vehicle, so that the cooling capacity remains optimal. Thereby, when the back plate is physically connected to the suction element, the driving means driving the suction element automatically also drive the back plate in a synchronized movement.

Preferably, the apertures in the array of apertures have a width that is smaller than 4 mm, preferably smaller than 3,5 mm, more preferably about 3 mm. Tests have shown that because the cleaning system is directly connected to the heat exchanger and provided for cleaning the array of apertures, the width of these apertures can be made smaller than in prior art heat exchangers. This is a direct result of the dust screen being omitted, so that air passage through the heat exchanger is optimized. Furthermore, apertures with a smaller width are in prior art systems more easily clogged. However, in the current system, the heat exchanger itself is constantly cleaned by the suction element so that clogging of the apertures is not an issue anymore. Because the width of the apertures in the array can be made smaller than in prior art cooling systems, the cooling capacity of the heat exchanger is significantly improved.

The invention further relates to a method for cleaning a cooling system, wherein the cooling system successively comprises an air intake, a heat exchanger defining an array of apertures for air passage, and at least one fan for forcing air to flow through the cooling system, the method comprising the steps of:
- reciprocatingly moving an elongated suction element over the array of apertures, the suction element thereby being positioned between the heat exchanger and the air intake; and
- moving an elongated back plate in sync with the suction element over the array of apertures, the back plate thereby being positioned between the heat exchanger and the at least one fan.

According to the invention, the heat exchanger itself is cleaned by reciprocatingly moving an elongated suction element over the array of apertures. The advantages of such direct cleaning of the heat exchanger are explained above in relation to the cooling system and equally apply to the method of the invention. Thereby preferably, the suction element comprises an elongated suction opening defined by outskirts, wherein the outskirts are mounted directly adjacent to a front surface of the heat exchanger, wherein the outskirts are mounted with respect to the front surface of the heat exchanger at a distance that is smaller than 30 mm and larger than 5 mm.

The invention will now be described in more details with respect to the drawings illustrating some preferred embodiments of the invention. In the drawings:
figure 1 illustrates an agricultural vehicle with a cooling package;
figure 2 shows a cross-sectional top view of the cooling system of an embodiment of the invention;
figure 3 shows a cross-sectional side view of the cooling system of figure 2; and
figure 4 shows a heat exchanger for use in the cooling system of the invention.

In the drawings a same reference number has been allocated to a same or analogous element.

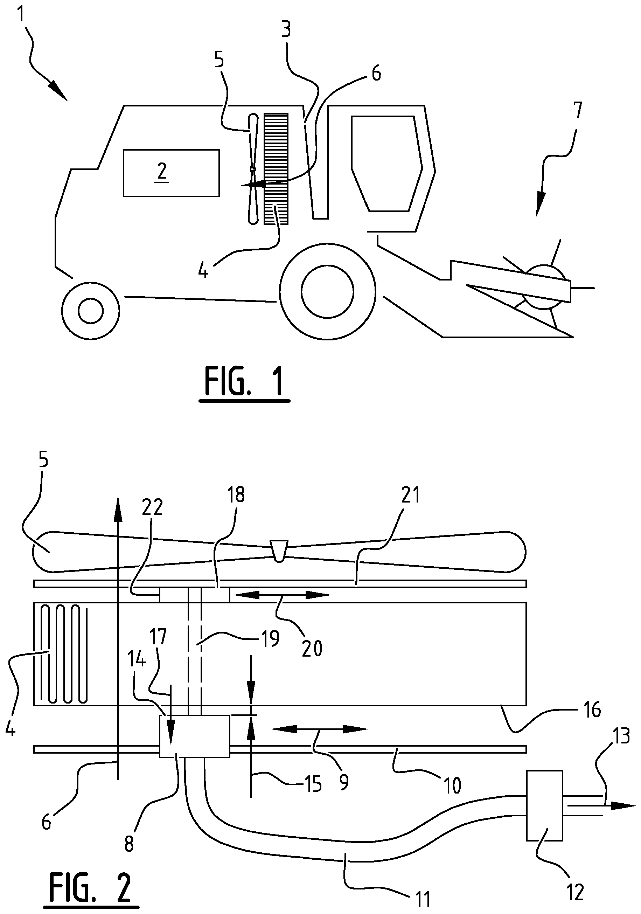

Figure 1 shows an agricultural vehicle 1. The agricultural vehicle 1 is self-propelled, meaning that it has an engine 2 for operation of the vehicle 1. As is conventional in agricultural vehicles, the engine 2 is adapted to deliver a significant amount of power for the operation of the agricultural vehicle 1. As a result, the agricultural vehicle 1 is provided with a corresponding cooling package with a significantly high cooling capacity. The cooling package basically comprises an air intake 3, a heat exchanger 4 and a fan 5. Thereby, the fan is provided to force air to flow via the air intake 3, through the heat exchanger 4 and typically also over the engine 2 (the air flow being indicated in figures with arrow 6). Thereby, the fan 5 ensures that the required (typically high) amount of air flows through the heat exchanger 4 to achieve the required cooling capacity. The heat exchanger 4 is provided to cool at least one of the following elements: the engine 2, the hydraulic system of the agricultural vehicle 1 (which hydraulic system for example actuates the header 7 and/or the crop processing equipment of the agricultural vehicle 1), or other heat generating elements of the agricultural vehicle 1. To this end, the heat exchanger 4 can be segmented wherein one segment forms a circuit for example with the cooling liquid of the engine 2, while another segment forms a cooling circuit with the hydraulic system.

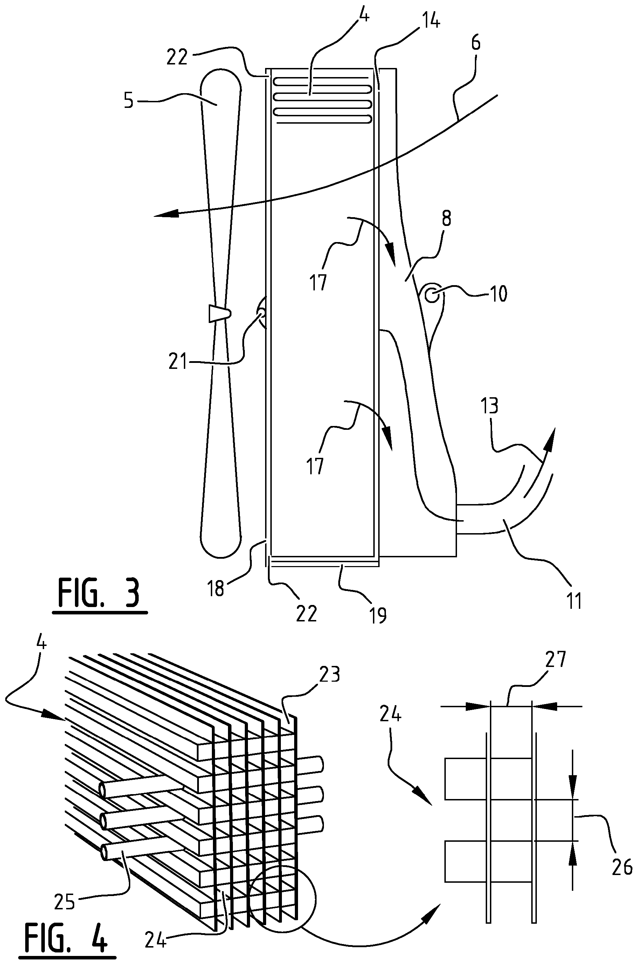

In operation, the agricultural vehicle 1 drives over a field with the header 7 manipulating the crop material on the field. This typically creates a cloud of dust and small particles around the agricultural vehicle 1. As a result, when air is drawn through the cooling package (according to arrow 6), dust and small particles residing in that cloud are drawn into the air intake 3. As will be further explained in relation to figure 4, heat exchangers 4 typically comprise an array of apertures (being typically small openings, for example openings of about 10 by 4 mm). To prevent the openings from being blocked by the dust and small particles (hereafter contaminants), a cleaning system is provided at the cooling package, which cleaning system will be further described hereunder, in relation to figures 2 and 3. Thereby, the goal of the cleaning system is to keep the heat exchanger openings open so that a maximum amount of air can flow through the heat exchanger 4 thereby maximizing the cooling capacity of the cooling package.

Figure 2 shows a cross-sectional top view of the cooling package, and shows how air flows (see arrow 6) through the heat exchanger 4 and the fan 5. In practice, the fan 5 will draw air through the heat exchanger 4. As a result of the air flow 6 drawing in contaminants, the latter can block the heat exchanger 4. Contaminants will typically cling to the front surface 16 of the heat exchanger 4. Therefore, a cleaning system is provided to clean the heat exchanger 4.

The cleaning system comprises a suction element 8 that is provided move 9 over the heat exchanger 4, more particularly, over the front surface 16 of the heat exchanger 4. This can be implemented by connecting the suction element 8 to a rail 10 that extends parallel to the heat exchanger 4. The principal basic operation of the suction element 8 corresponds to that of a conventional vacuum cleaner. To this end, the suction element 8 is connected to an air pump 12, for example via a flexible hose 11. Thereby, the suction element 8 is driven by the air pump 12 to draw air and contaminants away from the heat exchanger 4 (according to arrow 17). The air pump 12 is therefore further connected to an output that is typically located outside of the agricultural vehicle body, so that the contaminants (that are drawn from the heat exchanger 4 by the suction element) can be expelled and thereby removed from the agricultural vehicle 1 (this is illustrated by arrow 13). Thereby, the suction element 8 is reciprocatingly moved (see arrow 9) to cover substantially the complete front surface 16 of the heat exchanger 4 over a predetermined period of time. In this manner, the suction element 8 is provided to clean substantially the complete heat exchanger 4.

The suction element 8 has an opening 14 that is directed towards the front surface 16 of the heat exchanger 4. The opening 14 is preferably elongated with a length that corresponds to the height of the heat exchanger 4 (whereby the suction element is mounted to reciprocatingly move along the width of the heat exchanger 4). Alternatively, the opening 14 of the suction element 8 has a length that corresponds to the width of the heat exchanger 4, and wherein the suction element 8 is mounted to be moved in an up and down direction. The opening 14 is defined by outskirts of the suction element 8, wherein the outskirts define the shape of the opening of the suction element 8. The suction element 8 is mounted at a distance from the front surface of the heat exchanger 4 (this distance is illustrated in the figures with reference number 15) of more than 5 mm, preferably more than 10 mm, smaller than 30 mm, preferably smaller than 20 mm, most preferably within a range between 10 and 15 mm. This means that the outskirts of the suction element 8 hover over the front surface 16 of the heat exchanger 4 (meaning without touching the heat exchanger 4). As a result, when the suction element 8 is moved in a reciprocal movement 9, contaminants that are positioned on top of the front surface 16 of the heat exchanger will in most cases not be touched by the outskirts of the suction element 8. If the suction element 8 would touch the contaminants, the latter are likely to be pushed into the apertures of the heat exchanger 4 to the extent that they cannot be removed by the suction element 8 anymore, thereby resulting in a negative situation. Due to the distance 15 between the suction element 8 and the heat exchanger 4, such negative situation is avoided.

For the purpose of cleaning the heat exchanger 4, the suction element 8 cooperates with a back plate 18. The back plate 18 moves in sync with the suction element 8. Moving in sync is defined as that the suction element 8 and the back plate 18 cover a corresponding (or a same) part of the heat exchanger 4 during substantially the complete movement of the suction element 8. Thereby, it is mentioned that the heat exchanger 4 comprises an array of apertures for air passage 6. Thereby each apertures of the array of apertures extends from a front surface of the heat exchanger 4 to a back surface of the heat exchanger 4. Because the suction element 8 moves in sync with the back plate 18, the suction element 8 covers substantially the same apertures from the array of apertures as the back plate 18, and this at substantially each moment in time. In the example of figures 2 and 3, the back plate is physically connected to the suction element 8 via a rod 19 extending through a groove at the lower end of the heat exchanger 4. Alternatively, the back plate can be connected to the suction element via a first rod and a second rod, wherein the first rod is positioned at the bottom and the second rod is positioned at the top so that the back plate is completely carried (by physical connection) by the suction element. In such configuration, it is not necessary to guide the back plate, but it will be advantageous to firmly guide the suction element. The skilled person will recognize that other mechanisms can be used to synchronize the movement of the back plate 18 and the suction element 8, for example when both the suction element 8 and the back plate 18 are provided with an actuator and wherein the actuators are steered to move the back plate 18 in sync with the suction element 8.

The effect of the back plate 18 moving in sync with the suction element 8 is that the influence of the fan 5 is cancelled or at least minimized for the apertures of the array of the heat exchanger 4 that are cleaned by the suction element 8. Indeed, the suction element 8 draws material from the front surface 16 of the heat exchanger 4 in direction 17, while the fan 5 forces air to flow into a direction 6 that is opposite to direction 17. Without the back plate 18, the fan 5 would counteract (force air to flow in an opposite direction) on the suction element 8 to the extent that the suction element 8 cannot perform sufficient cleaning.

The back plate 18 is in the figure 2 mounted to a rail 21 that extends parallel to the rail 10 to which the suction element 8 is connected. Thereby, the back plate 18 is provided to move 20 in a reciprocal movement over the back surface of the heat exchanger 4.

The back plate preferably comprises an edge that is upright towards to back end of the heat exchanger 4. The edges are preferably formed from a flexible material, for example as brushes. These edges, indicated by reference number 22 in the figures, are provided to contact or at least to come close to the back surface of the heat exchanger so that the apertures covered by the back plate 18 are maximally shielded from the influences of the fan 5. The back plate 18 has a width that is substantially equal to the width of the suction element 8. Furthermore, the back plate 18 is elongated and has a length that is substantially equal to the length of the suction element 8 and therefore corresponds, at least in the example of figures 2 and 3, to the height of the heat exchanger 4.

A further optimization of the back plate function could be to make a connection between the back plate and an area of overpressure (e.g. outside the fan shroud). This way we could create a forced flow through the coolers to remove dust particles (opposite flow direction as normal cooling flow).

The suction element 8 preferably comprises an actuator so that the suction element 8 can be moved in reciprocal movement 9. The actuator can be a pneumatic, hydraulic, mechanical or electrical actuator.

Figure 3 shows a cross-sectional side view of the cooling package. Thereby figure 3 shows how air flows through the cooling package according to arrow 6. The figure shows a suction element 8 according to a specific example wherein the suction element 8 has two segments, being an upper segment and a lower segment. The combination of segments of the suction element 8 covers substantially the complete height of the heat exchanger 4. Each of the segments is connected to the flexible hose 11 so that contaminants can be removed 13 from the heat exchanger 4. Because of the multiple segments, suction power of the air pump 12 can be more equally divided over the opening 14 of the suction element 8. The figure shows how the height of the suction element 8 substantially corresponds to the height of the heat exchanger 4, so that substantially the complete heat exchanger 4 can be cleaned. The suction element 8 is connected via rod 19 to the back plate 18. Both the back plate 18 and the suction element 8 are movably mounted to respective rails 21 and 10. Thereby, the suction element 8 and the back plate 18 can move along the rails 10 and 21 over substantially the complete width of the heat exchanger 4, so that with a reciprocal movement 9, 20 substantially the complete heat exchanger 4 can be cleaned. In this context, it is noted that an elongated suction element 8 that is moved in a direction perpendicular to its longitudinal direction is preferred to clean a rectangular heat exchanger 4. However, the skilled person will recognize that other suspension mechanisms may have a same or similar effect.

Figure 4 shows a heat exchanger 4 in more detail. The figure shows how multiple heat exchanging fins 23 are successively arranged at a distance from one another, in between which fins fin-interconnecting-elements are provided to create an array of apertures 24. Through these heat exchanging fins, cooling liquid (liquid to be cooled) is circulated via a network of pipes 25. Thereby, figure 4 shows a close-up of the array of apertures and illustrates that apertures have substantially constant height 26 and width 27 (hereafter the dimensions of the apertures). Conventionally, agricultural heat exchangers are provided with apertures of about 10 by 4 mm. Larger apertures would reduce the efficiency of the cooling since the air contact surface of the heat exchanger would decrease. Smaller apertures would increase the risk of being blocked by contaminants. Using the cleaning system of the present invention allows the aperture dimensions to be reduced to about 10 by 3 mm. thereby cooling capacity has been increased with more than 10%. Where smaller apertures were conventionally linked to disadvantages, the smaller apertures in the cooling package of the invention have the effect that contaminants are held on the front surface 16 of the heat exchanger 4. Because the apertures are smaller (than conventionally), contaminants have less tendency to be drawn in to the heat exchanger, and remain on the top surface. This facilitates the cleaning of the heat exchanger, since the suction element 8 hovers over the front surface 16 of the heat exchanger 4. In this manner, a significantly higher cooling capacity can be achieved by applying the present invention.

The above described embodiments and the shown figures are illustrative and serve only for a better understanding of the invention. The invention is not limited to the described embodiments. Different alternatives, and preferred features described in the text can be freely combined by a skilled person and developed in more detail to form an operational whole without departing from the claimed invention. The scope of protection of the invention will therefore be defined solely by the claims.

## Claims

1. A cooling system for a work vehicle (1), the cooling system successively comprising an air intake (3), a heat exchanger (4) with an array of apertures (24) for air passage and at least one fan (5) for forcing air to flow from the air intake (3) through the cooling system, the cooling system further comprising an elongated suction element (8) that is moveable over the array of apertures (24), in an area between the heat exchanger and the air intake,
**characterized in that** the cooling system further comprises an elongated back plate (18) moveable over the array of apertures (24) in an area between the heat exchanger (4) and the at least one fan (5), the back plate being operationally connected to the suction element (8) so that the back plate (18) moves together with the suction element (8).

2. The cooling system of claim 1, wherein the suction element (8) comprises an elongated suction opening (14) defined by outskirts of the suction element, wherein the outskirts are mounted directly adjacent to a front surface of the heat exchanger, wherein the outskirts are mounted with respect to the front surface at a distance (15) that is smaller than 30 mm and that is larger than 5 mm.

3. The cooling system of claim 1 or 2, wherein the back plate (18) has a width that is substantially equal to the width of the elongated suction element (8).

4. The cooling system of any one of the previous claims, wherein the suction element (8) is connected to an outlet via an air pump (12) so that contaminants can be drawn from the array of apertures and expelled (13) via the outlet.

5. The cooling system of any one of the previous claims, wherein the elongated suction element (8) is moveably mounted to a first rail (10) that extends substantially perpendicular to a longitudinal direction of the suction element.

6. The cooling system of any one of the previous claims, wherein the suction element (8) comprises multiple suction channels to achieve a more uniform suction force along the height of the suction element.

7. The cooling system of any one of the previous claims, wherein the cooling system comprises a groove at the location of the heat exchanger (4), which groove extends in the moving direction of the suction element, and wherein the suction element (8) and the back plate (18) are physically connected via a rod (19) extending through the groove so that the back plate moves together with the suction element.

8. The cooling system of any one of the previous claims, wherein the back plate (18) is provided with raised edges (22), wherein the raised edges are provided to at least partially contact the heat exchanger.

9. The cooling system of claim 8 and claim 2, wherein outer dimensions of the suction element (8) correspond to outer dimensions of the back plate so that the outskirts of the suction element (8) and the raised edges cover a substantially equal area.

10. The cooling system of any one of the previous claims, wherein the heat exchanger (4) is substantially rectangular, and wherein the elongated suction element extends parallel to one of the sides of the rectangular heat exchanger and is provided to move perpendicular thereto.

11. The cooling system of any one of the previous claims, wherein the suction element (8) is provided with driving means for reciprocatingly driving the suction element over the heat exchanger.

12. The cooling system of any one of the previous claims, wherein the apertures in the array of apertures (24) have a width that is smaller than 4 mm, preferably smaller than 3,5 mm, more preferably about 3 mm.

13. A forage harvester (1) comprising a cooling system according to one of the previous claims.

14. Method for cleaning a cooling system, wherein the cooling system successively comprises an air intake (3), a heat exchanger (4) with an array of apertures (24) for air passage, and at least one fan (5) for forcing air to flow from the air intake (3) through the cooling system, the method comprising the steps of:
- reciprocatingly moving (9) an elongated suction element (8) over the array of apertures, the suction element thereby being positioned in an area between the heat exchanger and the air intake; and
- moving (20) an elongated back plate (18) together with the suction element over the array of apertures, the back plate thereby being positioned in an area between the heat exchanger and the at least one fan.

15. Method according to claim 14, wherein the suction element (8) comprises an elongated suction opening defined by outskirts of the suction element (8), wherein the outskirts are mounted directly adjacent to a front surface of the heat exchanger, wherein the outskirts are mounted with respect to the front surface at a distance (15) that is smaller than 30 mm and that is larger than 5 mm.

## Patentansprüche

1. Kühlsystem für ein Arbeitsfahrzeug (1), wobei das Kühlsystem nacheinander einen Lufteinlass (3), einen Wärmetauscher (4) mit einer Array von Öffnungen (24) für den Luftdurchlass und mindestens einen Lüfter (5) aufweist, um einen Luftstrom von dem Lufteinlass (3) durch das Kühlsystem zu zwingen, wobei das Kühlsystem des Weiteren ein längliches Saugelement (8) aufweist, das über das Array von Öffnungen (24) in einem Bereich zwischen dem Wärmetauscher und dem Lufteinlass bewegbar ist,
**dadurch gekennzeichnet, dass**
das Kühlsystem des Weiteren eine längliche Rückplatte (18) aufweist, die in einem Bereich zwischen dem Wärmetauscher (4) und dem mindestens einen Lüfter (5) über das Array von Öffnungen (24) bewegbar ist, wobei die Rückplatte wirksam mit dem Saugelement (8) verbunden ist, sodass die Rückplatte (18) sich zusammen mit dem Saugelement (8) bewegt.

2. Kühlsystem nach Anspruch 1, wobei das Saugelement (8) eine längliche Saugöffnung (14) aufweist, die durch Randbereiche des Saugelements definiert ist, wobei die Randbereiche direkt angrenzend an eine Vorderfläche des Wärmetauschers angebracht sind, wobei die Randbereiche bezüglich der Vorderfläche in einem Abstand (15) angebracht sind, der kleiner als 30 mm und größer als 5 mm ist.

3. Kühlsystem nach Anspruch 1 oder 2, wobei die Rückplatte (18) eine Breite aufweist, die im Wesentlichen gleich der Breite des länglichen Saugelements (8) ist.

4. Kühlsystem nach einem der vorhergehenden Ansprüche, wobei das Saugelement (8) mit einem Auslass über eine Luftpumpe (12) verbunden ist, sodass Verunreinigungen aus dem Array von Öffnungen herausgezogen und über den Auslass ausgestoßen (13) werden können.

5. Kühlsystem nach einem der vorhergehenden Ansprüche, wobei das längliche Saugelement (8) beweglich an einer ersten Schiene (10) angebracht ist, die sich im Wesentlichen senkrecht zu einer Längsrichtung des Saugelements erstreckt.

6. Kühlsystem nach einem der vorhergehenden Ansprüche, wobei das Saugelement (8) mehrfache Saugkanäle aufweist, um eine gleichmäßigere Saugkraft entlang der Höhe des Saugelements zu erzielen.

7. Kühlsystem nach einem der vorhergehenden Ansprüche, wobei das Kühlsystem einen Einschnitt am Ort des Wärmetauschers (4) aufweist, wobei der Einschnitt sich in der Bewegungsrichtung des Saugelements erstreckt und wobei das Saugelement (8) und die Rückplatte (18) körperlich über eine Stange (19) verbunden sind, die sich durch den Einschnitt erstreckt, sodass die Rückplatte sich zusammen mit dem Saugelement bewegt.

8. Kühlsystem nach einem der vorhergehenden Ansprüche, wobei die Rückplatte (18) mit erhöhten Rändern (22) versehen ist, wobei die erhöhten Ränder vorgesehen sind, um zumindest teilweise den Wärmetauscher zu berühren.

9. Kühlsystem nach Anspruch 8 und Anspruch 2, wobei die Außenabmessungen des Saugelements (8) den Außenabmessungen der Rückplatte entsprechen, sodass die Randbereiche des Saugelements (8) und die erhöhten Ränder einen im Wesentlichen gleichen Bereich bedecken.

10. Kühlsystem nach einem der vorhergehenden Ansprüche, wobei der Wärmetauscher (4) im Wesentlichen rechteckig ist, und wobei das längliche Saugelement sich parallel zu einer der Seiten des rechteckigen Wärmetauschers erstreckt und vorgesehen ist, um sich senkrecht dazu zu bewegen.

11. Kühlsystem nach einem der vorhergehenden Ansprüche, wobei das Saugelement (8) mit einer Antriebsvorrichtung versehen ist, um das Saugelement über dem Wärmetauscher hin und her zu bewegen.

12. Kühlsystem nach einem der vorhergehenden Ansprüche, wobei die Öffnungen in dem Array von Öffnungen (24) eine Breite aufweisen, die kleiner als 4 mm, vorzugsweise kleiner als 3,5 mm ist und noch bevorzugter etwa 3 mm beträgt.

13. Feldhäcksler (1) mit einem Kühlsystem nach einem der vorhergehenden Ansprüche.

14. Verfahren zum Reinigen eines Kühlsystems, wobei das Kühlsystem nacheinander einen Lufteinlass (3), einen Wärmetauscher (4) mit einem Array von Öffnungen (24) zum Luftdurchlass und mindestens einen Lüfter (5) zum Zwingen eines Luftstroms von dem Lufteinlass (3) durch das Kühlsystem, wobei das Verfahren folgende Schritte aufweist:
- Hin- und Herbewegen (9) eines länglichen Saugelements (8) über das Array von Öffnungen, wobei das Saugelement dadurch in einem Bereich zwischen dem Wärmetauscher und dem Lufteinlass angeordnet ist; und
- Bewegen (20) einer länglichen Rückplatte (18) zusammen mit dem Saugelement über das Array von Öffnungen, wodurch die Rückplatte in einem Bereich zwischen dem Wärmetauscher und dem mindestens einen Lüfter angeordnet ist.

15. Verfahren nach Anspruch 14, wobei das Saugelement (8) eine längliche Saugöffnung aufweist, die durch Randbereiche des Saugelements (8) definiert ist, wobei die Randbereiche direkt angrenzend an eine Vorderfläche des Wärmetauschers angebracht sind, wobei die Randbereiche bezüglich der Vorderfläche in einem Abstand (15) angebracht sind, der kleiner als 30 mm und der größer ist als 5 mm.

## Revendications

1. Système de refroidissement pour un véhicule de travail (1), le système de refroidissement comprenant successivement une admission d'air (3), un échangeur de chaleur (4) doté d'un réseau d'ouvertures (24) pour le passage de l'air et au moins un ventilateur (5) pour forcer l'air à s'écouler depuis l'admission d'air (3) à travers le système de refroidissement, le système de refroidissement comprenant en outre un élément d'aspiration allongé (8) qui est mobile au-dessus du réseau d'ouvertures (24), dans une zone entre l'échangeur de chaleur et l'admission d'air,
**caractérisé en ce que** le système de refroidissement comprend en outre une plaque dorsale allongée (18) mobile au-dessus du réseau d'ouvertures (24) dans une zone entre l'échangeur de chaleur (4) et le au moins un ventilateur (5), la plaque dorsale étant fonctionnellement connectée à l'élément d'aspiration (8) de telle sorte que la plaque dorsale (18) se déplace de concert avec l'élément d'aspiration (8).

2. Système de refroidissement selon la revendication 1, dans lequel l'élément d'aspiration (8) comprend une ouverture d'aspiration allongée (14) délimitée par des périphéries de l'élément d'aspiration, les périphéries étant montées directement à côté d'une surface avant de l'échangeur de chaleur, et les périphéries étant montées à une distance (15) inférieure à 30 mm et supérieure à 5 mm de la surface avant.

3. Système de refroidissement selon la revendication 1 ou 2, dans lequel la plaque dorsale (18) a une largeur qui est sensiblement égale à la largeur de l'élément d'aspiration allongé (8).

4. Système de refroidissement selon l'une quelconque des revendications précédentes, dans lequel l'élément d'aspiration (8) est relié à une sortie via une pompe à air (12) de telle manière que des contaminants peuvent être aspirés du réseau d'ouvertures et expulsés (13) via la sortie.

5. Système de refroidissement selon l'une quelconque des revendications précédentes, dans lequel l'élément d'aspiration allongé (8) est monté de façon mobile sur un premier rail (10) qui s'étend sensiblement perpendiculairement à une direction longitudinale de l'élément d'aspiration.

6. Système de refroidissement selon l'une quelconque des revendications précédentes, dans lequel l'élément d'aspiration (8) comprend des canaux d'aspiration multiples permettant d'obtenir une force d'aspiration plus uniforme sur la hauteur de l'élément d'aspiration.

7. Système de refroidissement selon l'une quelconque des revendications précédentes, dans lequel le système de refroidissement comprend une rainure à l'emplacement de l'échangeur de chaleur (4), laquelle rainure s'étend dans la direction de déplacement de l'élément d'aspiration, et l'élément d'aspiration (8) et la plaque dorsale (18) sont reliés physiquement par une tige (19) s'étendant à travers la rainure de telle manière que la plaque dorsale se déplace de concert avec l'élément d'aspiration.

8. Système de refroidissement selon l'une quelconque des revendications précédentes, dans lequel la plaque dorsale (18) est pourvue de bords surélevés (22) qui sont agencés pour entrer en contact au moins en partie avec l'échangeur de chaleur.

9. Système de refroidissement selon la revendication 8 et revendication 2, dans lequel les dimensions extérieures de l'élément d'aspiration (8) correspondent aux dimensions extérieures de la plaque dorsale de telle manière que les périphéries de l'élément d'aspiration (8) et des bords surélevés couvrent une surface sensiblement égale.

10. Système de refroidissement selon l'une quelconque des revendications précédentes, dans lequel l'échangeur de chaleur (4) est sensiblement rectangulaire, et l'élément d'aspiration allongé s'étend parallèlement à l'un des côtés de l'échangeur de chaleur rectangulaire et est agencé pour se déplacer perpendiculairement à celui-ci.

11. Système de refroidissement selon l'une quelconque des revendications précédentes, dans lequel l'élément d'aspiration (8) est pourvu de moyens d'entraînement pour entraîner dans un mouvement de va-et-vient l'élément d'aspiration au-dessus de l'échangeur de chaleur.

12. Système de refroidissement selon l'une quelconque des revendications précédentes, dans lequel les ouvertures dans le réseau d'ouvertures (24) ont une largeur inférieure à 4 mm, de préférence inférieure à 3,5 mm et de manière plus préférée d'environ 3 mm.

13. Récolteuse de fourrage (1) comprenant un système de refroidissement selon l'une des revendications précédentes.

14. Procédé pour nettoyer un système de refroidissement, selon lequel le système de refroidissement comprend successivement une admission d'air (3), un échangeur de chaleur (4) doté d'un réseau d'ouvertures (24) pour le passage de l'air, et au moins un ventilateur (5) pour forcer l'air à s'écouler depuis l'admission d'air (3) à travers le système de refroidissement, le procédé comprenant les étapes consistant à :
- déplacer selon un mouvement de va-et-vient (9) un élément d'aspiration allongé (8) au-dessus du réseau d'ouvertures, l'élément d'aspiration étant positionné ainsi dans une zone entre l'échangeur de chaleur et l'admission d'air, et
- déplacer (20) une plaque dorsale allongée (18) de concert avec l'élément d'aspiration au-dessus du réseau d'ouvertures, la plaque dorsale étant ainsi positionnée dans une zone entre l'échangeur de chaleur et le au moins un ventilateur.

15. Procédé selon la revendication 14, dans lequel l'élément d'aspiration (8) comprend une ouverture d'aspiration allongée délimitée par des périphéries de l'élément d'aspiration (8), les périphéries étant montées directement à côté d'une surface avant de l'échangeur de chaleur, et les périphéries étant montées à une distance (15) inférieure à 30 mm et supérieure à 5 mm de la surface avant.
